# EUROPEAN PATENT APPLICATION

(11) **EP 2 302 923 A1**
(43) Date of publication of application: **30.03.2011**
(21) Application number: 09171410.5
(22) Date of filing: 25.09.2009
(51) Int. Cl.: H04N 7/16, H04N 7/167

(54) **Method for displaying enhanced video content**

(71) Applicant: Nagravision S.A., 1033 Cheseaux-sur-Lausanne (CH)
(72) Inventor: Wendling, Bertrand, 1180, Rolle (CH)
(74) Representative: Leman Consulting S.A.

(57) **Abstract**

The present invention provides a solution to the problem of displaying enhanced video content from a remote server in situations where a connection to the remote server provides inadequate bandwidth is available to be able to do so. The solution involves pre-storing the enhanced video content locally, receiving a broadcast of a default format version of the enhanced content and displaying the enhanced content instead of the default format content. The present invention also provides a means for ensuring that such pre-stored content is only viewed at a predefined time and by viewers who are authorised to do so.

## Description

### INTRODUCTION

The present invention relates to the domain of video systems for displaying digital image data and more particularly to systems and methods for displaying enhanced digital video content.

### STATE OF THE ART

Recording and playback of digital video content by consumers is now commonplace. Furthermore, demand for high definition video capability in such recording or playback is ever increasing. With more and more consumers having access to high definition video viewing equipment, coupled with the need to remain backward-compatible with standard definition formats, there has been a need to have the flexibility of choosing whether a particular video content be viewed in standard format or in high definition format. Indeed, much work has been done in developing systems and methods for storing video content on a limited-capacity storage medium such as a digital video disc (DVD) in a format which allows the consumer to choose whether he wishes to display the content in standard format or high definition format. For example, in United States Patent Application 2005/0185937A1 a method is described for storing a standard definition compatible video content on a storage medium as a base layer and further storing an enhancement layer comprising data which will allow the standard definition video content to be upgraded to high definition content.

Providing the capability of choosing to view video content as standard definition or high definition is therefore fairly straight-forward according to the state of the art provided the connection between the consumer's viewing equipment and the source of the high definition video content has a high enough bandwidth to be able receive the video content. This is usually the case in a system where the source is a DVD to which the viewing equipment is connected via a high-bandwidth connection. However, if the source of the high definition video is a broadcast centre and the consumer's viewing equipment is fed by a receiver connected to the broadcast centre by any of the usual means, such as terrestrial cable, satellite connection, RF transmission etc., then depending on the particular connection that exists between the receiver device and the broadcast centre, the connection may or may not be capable of furnishing the required bandwidth to achieve good quality high definition video transfer from the broadcast centre to the receiver.

The present invention therefore aims to address the problem of a viewer being able to view enhanced video content broadcast from a broadcast centre to a receiver where said receiver may not necessarily have a connection to the broadcast centre with sufficiently large bandwidth to simultaneously receive and view said content.

### BRIEF SUMMARY OF THE INVENTION

The present invention provides a solution to the problem of being able to display, on a display unit (VDU), enhanced video content from a remote server in situations where the available bandwidth of a connection to the remote server does not permit to do so. The invention provides a method for displaying enhanced video content (EVC) for at least a part of a broadcast, said method using a multimedia unit (STB) comprising at least one receiver (RX) and a data storage medium (SU), said broadcast comprising a default format video content (DVC) and at least one default identification tag (DVT) to identify at least part of the broadcast, said method comprising the steps of:
- receiving, from a broadcast centre (BR), at least part of said enhanced video content (EVC, EL) and an enhanced identification tag (EVT) corresponding to the at least one default identification tag (DVT) by the at least one receiver (RX), said at least part of said enhanced video content (EVC, EL) comprising at least a part of an enhanced version of said default format video content (DVC),
- storing said at least part of said enhanced video content (EVC, EL) and said enhanced identification tag (EVT) in the data storage medium (SU),
- receiving said broadcast at a later time from said broadcast centre (BR),
- comparing the default identification tag (DVT) from the received broadcast with the stored enhanced identification tag (EVT),
- if there is a match between the default identification tag (DVT) and the enhanced identification tag (EVT), then either replacing or enhancing said broadcast with the corresponding stored enhanced content (EVC, EL) to be displayed on the display unit (VDU).

### BRIEF DESCRIPTION OF THE DRAWINGS

The present invention will best be understood by referring to the following detailed description of preferred embodiments when read in conjunction with the accompanying drawings, wherein:
- Fig. 1 shows a schematic diagram of an embodiment of the present invention.
- Fig. 2 shows a schematic diagram of a further embodiment of the present invention.
- Fig.3 shows a schematic diagram of yet a further embodiment of the present invention.
- Fig. 4 shows a schematic diagram of an embodiment of the present invention which includes techniques used in the Pay-TV domain using a security module.

### DETAILED DESCRIPTION

A given viewer of video content may have access to a broadcast service and may have a multimedia unit comprising a receiver and may also have a means for displaying enhanced video. However, whether or not the viewer is able to receive and view the enhanced video will depend on the bandwidth capability of his connection between the multimedia unit and the centre from where the service is broadcast. This can mean that a significant proportion of the potential viewing population could be excluded from being able to view enhanced video content in spite of the fact that their viewing equipment allows them to do so.

A multimedia unit could be in the form of a set-top box, which is attached to a screen or it could be built into a TV set including a screen. Essentially, then multimedia unit extracts various services from a broadcast and process the services for display.

By enhanced video it is meant any video format which offers either more definition or three-dimensional effects or any other enhancement above the generally accepted default format of video. Enhanced video formats usually require more data and therefore more bandwidth to transmit than the default format. One default format is commonly known as standard definition format. One example of an enhanced video formats is high definition video. Another example is Augmented Reality (AR). Augmented Reality includes such applications as head-up displays (HUD), virtual retinal displays, 3-D displays etc, wherein a live direct or indirect view of a physical real-world environment is augmented by virtual computer-generated imagery

By way of example of a situation where the present invention may be deployed, in the field of IPTV networks, the broadcast service comes from a server, and viewers, who may or may not subscribe to the service, have access to multimedia units which are connected to the server via the internet enabling them to receive and view the broadcast service. IPTV systems are generally intended to be able to handle enhanced video transmission, and appropriately comprise a DSLAM or digital subscriber line access multiplexer. The DSLAM is a network device that connects multiple digital subscriber lines (DSL) to a high-speed internet backbone using multiplexing techniques and allows telephone lines to make faster connections to the internet. However the "last mile" of a connection between the subscriber and the DSLAM is often made of a simple balanced pair cable, which has higher attenuation at higher frequencies. For this reason the longer this "last mile" connection the lower the bandwidth. Local bandwidth conditions therefore experienced by a subscriber may vary between 25Mbit/s for a balanced cable pair of a few hundred metres to 1 kbit/s for a balanced pair of a few kilometers.

As mentioned above, the present invention aims to provide a method for displaying enhanced video content broadcast from a transmitter to a multimedia unit comprising a receiver, where a connection between the transmitter and the receiver may not necessarily have sufficient bandwidth to be able to simultaneously receive and display the enhanced video broadcast on the display. It is worth noting that the invention is not restricted to IPTV networks, but can apply to any type of broadcasting network such as cable, satellite or conventional RF networks.

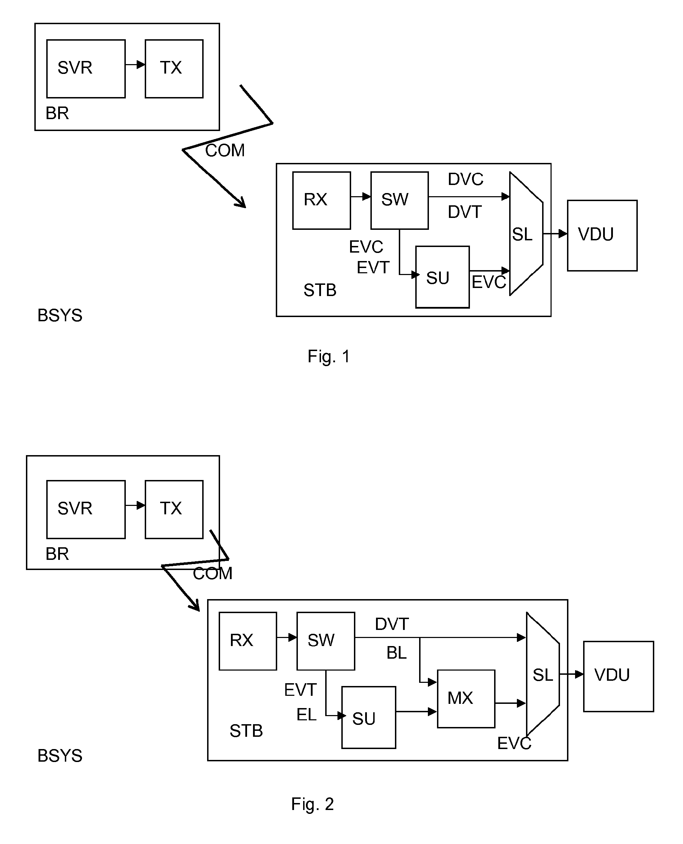

Fig. 1 illustrates how, according to an embodiment of the present invention, a viewer having access to a multimedia unit (STB) may view enhanced video content (HDV) from a broadcast centre (BR) regardless of the fact that the bandwidth of his connection (COM) to the broadcast centre (BR) would not normally allow him to receive and view such enhanced video content (EVC). The figure shows a broadcast system (BSYS) comprising a broadcast centre (BR) and at least one multimedia unit (STB). The broadcast centre (BR) comprises a server (SVR) and a transmitter (TX).

The multimedia unit (STB) comprises a receiver (RX) and a storage medium (SU) and is connected to a display unit (VDU). First the broadcast centre (BR) transmits enhanced video content to the at least one multimedia unit (STB) via the connection (COM). This transmission is made at a data rate low enough for any multimedia unit (STB) in the system to be able to receive the transmission, for example at a data rate compatible with a default format video transmission. At this time the broadcast centre (BR) also transmits an enhanced identification tag (EVT), used to identify the content (EVC). The multimedia unit (STB) receives the transmission (EVT, EVC), identifies it (SW) as being enhanced video, and stores the enhanced video content (EVC), along with the enhanced identification tag (EVT) onto the storage medium (SU). At some later time, a default format version (DVC) of the previously stored enhanced video content (EVC) is broadcast along with a default identification tag (DVT) identifying the content as default format video and corresponding to the previously stored enhanced identification tag (EVT). At this time the viewer's multimedia unit (STB) may select (SL) the previously stored enhanced version (EVC) of the content for display rather than displaying the currently transmitted default format version (DVC), thereby allowing the viewer to view the currently transmitted default format content as enhanced video.

Another application in which an embodiment of the present invention may be deployed is in a situation where different versions of a video content are to be distributed to different viewers, perhaps based on geographical location, for example, each of the viewers will receive his respective version of the enhanced content to be stored in his multimedia unit. At the time the default format of the video content is broadcast, each viewer will be able to view his own respective version of the enhanced video content. In this case there might not necessarily be any enhancement in the quality of the enhanced content - the enhancement being that it is possible to view different versions of the same content - and therefore the invention is not necessarily aimed solely at addressing a problem of bandwidth availability.

It is worth noting that the enhanced video content and the default format video content need not come from the same place. Indeed, according to an embodiment of the present invention, there could be a server from which the enhanced video content is distributed and another server from where the default format content is broadcast. In this case we refer to an enhanced server (ESVR) upon which the enhanced video content is stored and a broadcast server (SVR) from which the broadcast default format video content is taken. The two servers may of course reside in the broadcast centre i.e. the two servers may indeed be realised as one unique server (SVR) or they may be remote from each other, with the multimedia unit having direct access to both servers.

The transmission of the enhanced video content may be made by made by the enhanced server in a broadcast manner as described above or, in the case where a direct (peer to peer) connection between the multimedia unit and the server exists, the transmission could be made on a one to one basis. Either the server initiates the transfer of the enhanced video content to the multimedia unit, i.e. a push configuration or the viewer initiates the transfer of the enhanced video content from the server. Indeed there may be a menu from which the viewer would select enhanced video content to store in his multimedia unit for future viewing whenever the default format is broadcast from the broadcast centre.

It is worth noting that the transmission of the enhanced video content (EVC) would generally be made at a time when the multimedia unit (STB) is not being used to view a transmission, for example during the night. In an embodiment of the present invention the server (SVR) can detect when a viewer is not using the receiver (RX) on his multimedia unit (STB) and transmit enhanced video content (EVC) to that user at that time to be stored for later recall at such time as when the default format version of the video content (DVC) is being broadcast.

In another embodiment of the present invention, when the multimedia unit is put in standby mode, it can tune its receiver to listen on a particular channel for transmissions being made by the enhanced server. In this case the enhanced server would transmit all enhanced content from various sources, e.g. different channels, on this particular channel. Otherwise, if the multimedia unit stays on the channel which was last being used before going into standby mode, then it would receive enhanced content pertinent to that particular channel during the time that it is standby. Enhanced video content can have a high value on the video market and as such it would not be desirable for such content to be forwarded from an intended viewer to another viewer, especially in systems wherein the intended viewer is a paying subscriber to the service which broadcasts the content whereas the other viewer is not a subscriber. For this reason, the storage unit within the multimedia unit, upon which the enhanced content is stored, or at least the part of the storage unit where the content is stored, is not directly accessible by the user. Access to the stored data (EVC, EVT) is restricted to the operating system. In this way the broadcast server can ensure that a viewer will not distribute the enhanced content and that he will only be able to view it when the appropriate default identification tag is received, i.e. when the default format version of the content is broadcast.

In another embodiment of the present invention, further means are employed to dissuade the redistribution of enhanced video content stored on a viewer's multimedia unit (STB). In this embodiment, instead of pre-storing the enhanced video content in its entirety, only a part of the enhanced content, known as an enhancement layer (EL), is transmitted to be pre-stored. The corresponding default format transmission of the video content represents a base layer (BL) and using any of the techniques known in the state of the art, the base layer (BL) and the enhancement layer (EL) are combined (MX) to give the full high density version of the content (EVC) once the base layer (BL) is broadcast and matched to the enhancement layer via the enhanced identification tag (EVT) and default identification tag (DVT). This embodiment is illustrated in Fig. 2.

In the embodiment described above, wherein the pre-stored enhanced content does not merely replace the default content but is combined with the default content, the multimedia unit comprises means to synchronise the enhanced content with the default content. The synchronization is done according to the methods commonly used in special scalability algorithms and may use Laplacian pyramid techniques.

As a further protection against unauthorised use of the pre-stored enhanced content or part of the enhanced content, the enhanced identification tag may further comprise an expiry code, or a dedicated expiry tag could be used, indicating a date or a time after which the enhanced content may no longer be used. In such a system, a flush or erase of such expired content could be done by the operating system thus ensuring the content may no longer be used.

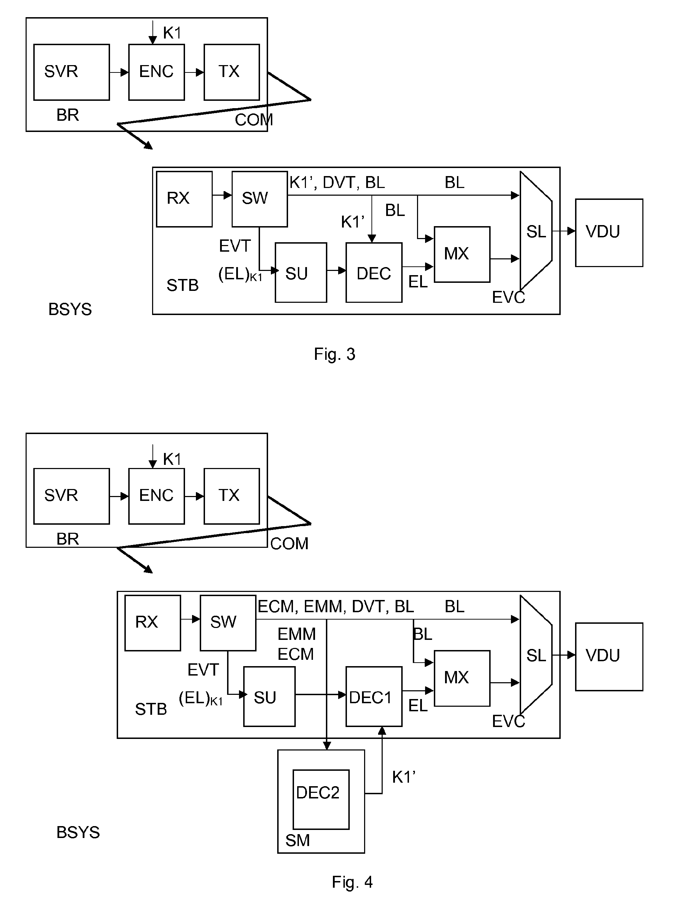

Continuing with the notion of increased security, in another embodiment of the present invention, instead of transmitting the enhanced video content (EVC) or the enhancement layer (EL) in clear, it may be transmitted in encrypted form, encrypted under an encryption key K1, ((EVC)_{K1} or (EL)_{K1}), as illustrated in Fig. 3. In this embodiment the multimedia unit further comprises a decryption unit (DEC) to decrypt the encrypted content. As in any encryption/decryption system, there is a decryption key (K1') which matches an encryption key (K1). According to whether the encryption system uses a symmetric or an asymmetric algorithm, the decryption key (K1') will either be the same as the encryption key (K1) or forming a pair of public and private keys. The key (K1') to decrypt the encrypted enhancement layer or enhanced video content would be transmitted as part of the default identification tag (DVT) when the corresponding default format broadcast is made, thus guaranteeing that the enhanced video content could only be viewed at the time the default format version is broadcast. Similarly, a dedicated decryption key tag could be used to transmit the decryption key instead of using the default identification tag.

Systems and methods are known from the domain of Pay-TV wherein a multimedia unit may be associated with a security module (SM), within which security operations are carried out. The security module (SM) may take one of several forms, including a microprocessor card, a smart card or more generally an electronic module, perhaps in the form of a key or a badge etc., and is generally removable and connectable to the multimedia unit (STB). This type of security module may either have electrical contacts to form a connection between the multimedia unit and the security module or may be contactless. Other forms include an integrated circuit chip soldered into the multimedia unit in a tamperproof manner or it could be integrated on a circuit which has another function such as descrambling or it may even be realised as software rather than hardware. The type of security operations which are carried out in the security module are the decryption (DEC2) of ECMs (entitlement control messages), the processing of EMMs (entitlement management messages), the storage of decryption keys (K1') decrypted (DEC2) from the ECMs and the recording of different rights. The decryption of encrypted content may also be carried out in the security module although in most cases it is done outside of the security module. A further embodiment of the present invention, illustrated in Fig. 4, borrows the techniques described above to give a multimedia unit (STB) with its associated security module (SM). The enhanced video content (EVC) or part of the enhanced video content (EL) is transmitted by the broadcast centre in encrypted format ((EVC)_{K1} or (EL)_{K1}) and pre-stored in the storage medium (SU) of the multimedia unit (STB) along with its associated enhanced identification tag (EVT). When the corresponding default format video content (DVC) is broadcast, with its default identification tag (DVT) corresponding to the pre-stored enhanced identification tag (EVT), the multimedia unit (STB) can fetch the decryption keys (K1') from the security module (SM). The multimedia module can then decrypt (DEC1) the encrypted content. Appropriate EMMs may be broadcast in order to configure the security module with the rights to which it is entitled according to the type of subscription the viewer has paid for. For example a subscriber may buy the rights to watch certain channels or certain films or certain rights may be time-bound etc. Similarly, ECMs are broadcast along with the default format video content (DVC) in order for the security module with the appropriate rights to be able decrypt the ECMs to obtain the necessary control words to give the decryption keys (K1'). The decryption keys are passed to the multimedia unit so that the encrypted content may be decrypted in the multimedia's decryption unit, thus enabling the subscriber to view the enhanced video content (EVC).

The security module can comprises a credit that can be used when the user upgrades the default video content to the enhanced content. The viewer is prompted by a message when the default identification tag matches a pre-stored enhanced identification tag. The message comprises the billing information informing the user about the amount of credit needed for this upgrade. As soon as the user has given his approval, the security module proceeds with the credit balance and returns the decryption key to the multimedia unit, thus allowing the latter to decrypt the enhanced content for display.

As well as the rights described above, the present invention allows for further usage rules to be configured and verified at the multimedia unit or within the security module. For example usage rules may include being able to watch any default format broadcast or to record it in a user-accessible region of the storage unit or an OS-accessible region of the storage unit whereas it may only be possible to watch an enhanced version of the broadcast or to store it onto an OS-accessible region of the storage unit but not a user-accessible region.

In another embodiment of the present invention the server (SVR) can predict which video content should be pushed to a particular viewer. In this embodiment each multimedia unit (STB) stores statistics of which content has been viewed by the viewer. This information is sent back to the server and used by the server to make a viewing profile for the particular viewer. The server further has access to a profile for each of the pieces of enhanced video content that it can push to viewers. By comparing the profiles of the video content with the viewing profile of each user, the server can select which content to send to which viewer with a reasonable amount of confidence that such content will be viewed by the viewer in enhanced format.

In this embodiment, the multimedia unit, while in standby mode, will connect to the enhanced server to the determination of the supposed enhanced content that will be of interest to the viewer. The enhanced server then downloads the enhanced content to the multimedia unit for future synchronization with the broadcast content.

## Claims

1. A method for displaying, on a display unit (VDU), enhanced video content (EVC) for at least a part of a broadcast, said method using a multimedia unit (STB) comprising at least one receiver (RX), and a data storage medium (SU), said broadcast comprising default format video content (DVC) and at least one default identification tag (DVT) to identify the at least part of the broadcast, said method comprising the steps of:
- receiving at least part of said enhanced video content (EVC, EL) and an enhanced identification tag (EVT) corresponding to the at least one default identification tag (DVT) by the at least one receiver (RX), said at least part of said enhanced video content (EVC, EL) comprising at least a part of an enhanced version of said default format video content (DVC),
- storing said at least part of said enhanced video content (EVC, EL) and said enhanced identification tag (EVT) in the data storage medium (SU),
- receiving said broadcast at a later time from said broadcast centre (BR),
- comparing the at least one SD definition tag (DVT) from the received broadcast with the stored enhanced identification tag (EVT),
- if there is a match between the default identification tag (DVT) and the enhanced identification tag (EVT), then either replacing or enhancing said at least part of the broadcast with the corresponding stored at least part of said enhanced content (EVC, EL) to be displayed on the display unit (VDU).

2. The method according to claim 1, wherein the at least part of enhanced video content (EVC) resides on an enhanced video server (ESVR) and the default format video content resides on a broadcast server (SVR).

3. The method according to claim 1, wherein the enhanced video server (ESVR) and the broadcast server (SVR) are separate from each other.

4. The method according to claim 1, wherein the enhanced video server (ESVR) and the broadcast server (SVR) form one unique server.

5. The method according to any of claims 2 to 4, wherein the enhanced video content (EVC, EL) is received by the multimedia unit (STB) upon request from the multimedia unit (STB) to the enhanced video server (ESVR).

6. The method according to any of claims 2 to 4, wherein the enhanced video content (EVC, EL) is received by the multimedia unit (STB) following an initiative taken by the enhanced video server (ESVR).

7. The method according to any of claims 1 to 6, wherein at least part of said at least part of enhanced video content (EVC, EL) is encrypted under an encryption key (K1) to give an encrypted content ((EVC)_{K1}, (EL)_{K1}) at the broadcast centre (BR), the latter being in charge of broadcasting an equivalent key (K1') to the encryption key (K1), and wherein said multimedia unit further comprises a decryption unit (DEC), said method further comprising a step of decrypting said encrypted content ((EVC)_{K1}, (EL)_{K1}) using said decryption key (K1') to give said at least part of said enhanced video content (EVC, EL).

8. The method according to claim 7, wherein said multimedia unit (STB) further comprises a security module (SM), said security module (SM) and wherein said broadcast further comprises at least one ECM message (ECM), said message comprising a cryptogram of said decryption key (K1'), said method further comprising a step of decrypting the ECM using the security module to obtain the decryption key (K1').

9. The method according to any of claims 1 to 8, wherein said storage medium (SU) comprises at least one protected area which is not directly accessible and said at least part of enhanced video content (EVC, EL) or said encrypted content ((EVC)_{K1}, (EL)_{K1}) is stored in said protected area.

10. The method according to any of claims 7 to 9, wherein said broadcast further comprises an expiry code to indicate when said at least part of enhanced video content (EVC, EL) or said encrypted content ((EVe)_{K1}, (EL)_{K1}) may be erased, said multimedia unit erasing the enhanced video content (EVC, EL) or said encrypted content ((EVC)_{K1}, (EL)_{K1}) when the expiry date is past.

11. The method according to any of claims 1 to 4, wherein said broadcast further comprises at least one usage rule to instruct the multimedia unit as to which content may be stored and where it may be stored.

12. The method according to any of claims 1 to 4 wherein said at least part of enhanced video content (EVC, EL) or said encrypted content ((EVC)_{K1}, (EL)_{K1}) is received when the receiver (RX) is not being used to receive other content.
